# EUROPEAN PATENT APPLICATION

(11) **EP 4 819 062 A1**
(43) Date of publication of application: **07.10.2026**
(21) Application number: 26170660.0
(22) Date of filing: 02.04.2026
(51) Int. Cl.: G06V 10/25, G05B 19/418, G06Q 10/08, G06V 10/26, G06V 10/764, G06V 20/40, G06V 20/52, G06V 20/70, B65G 43/08, B65G 47/00

(54) **SYSTEMS AND METHODS FOR DETERMINING OCCUPANCY IN CONVEYANCE SYSTEMS**

(30) Priority: 03.04.2025 US 202563782744 P; 31.03.2026 US 202619634926
(71) Applicant: Plus One Robotics, Inc., San Antonio, TX 78226 (US)
(72) Inventor: Majumdar, Abhijit, San Antonio, 78226 (US); Moreno, David, San Antonio, 78226 (US)
(74) Representative: Fuchs Patentanwälte Partnerschaft mbB

(57) **Abstract**

A machine vision apparatus for real-time spatial occupancy detection on a moving conveyor surface comprises an image capture device positioned to acquire sequential frames of the conveyor at a rate of approximately 20-25 frames per second, and a dedicated image processing unit configured to perform pixel-level differential analysis between each acquired frame and a stored reference image representing the unoccupied conveyor surface. The processing unit partitions the conveyor image into a predetermined grid of discrete spatial zones and generates a binary bitmask data structure encoding the occupancy state of each zone based on computed differential thresholds. The bitmask is transmitted via a hardware communication interface to a robotic placement controller, enabling collision-free package placement onto unoccupied zones. The system further implements temporal tracking of detected objects across successive frames to identify conveyor anomalies including package stalling conditions. The apparatus provides a specific, hardware-implemented improvement to automated conveyor loading operations.

## Description

### CROSS-REFERENCE TO RELATED APPLICATIONS

This application claims the benefit of U.S. Non-Provisional Application 19/634,926, filed March 31, 2026, titled "SYSTEMS AND METHODS FOR DETERMINING OCCUPANCY IN CONVEYANCE SYSTEMS", and U.S. Provisional Application 63/782,744, filed April 3, 2025, titled "SYSTEMS AND METHODS FOR DETERMINING OCCUPANCY IN CONVEYANCE SYSTEMS". The contents of the above identified applications are incorporated herein by reference in their entirety.

### BACKGROUND

### Field of the Art

The present disclosure is related to the field of automated conveyor belt monitoring systems, and more particularly to machine vision-based systems for real-time detection and tracking of package placement on a conveyor belt surface using image comparison and zone-based occupancy mapping to coordinate robotic placement operations.

### Discussion of the State of the Art

Conveyor systems are widely used in logistics, manufacturing, and parcel handling operations to transport items between processing stages. Detecting whether a given section of a conveyor belt is occupied by an item is a foundational requirement for sorting, routing, and tracking operations. Existing occupancy detection systems predominantly rely on arrays of photo-based linear sensors positioned adjacent to the conveyor belt. These sensors function by emitting light beams across or along the conveyor surface and detecting disruptions in those beams as objects pass through. While this approach is functional in many scenarios, it presents a number of persistent problems. The sensors themselves are expensive, and deploying them requires extensive setup and calibration. When the items to be detected are thin or flat-such as envelopes, flexible pouches, or low-profile parcels-the sensors must be mounted in close proximity to the conveyor surface to ensure the light beam is interrupted. This requirement imposes tight mechanical tolerances on the conveyor system, demanding that the belt remain extremely taut and precisely aligned at all times. In practice, conveyor belts are subject to regular vibrations, mechanical wear, and material stretch over time, all of which cause the belt surface to shift relative to the sensors. These shifts produce frequent false readings, where the system registers an object as present when none exists, or fails to detect an object that is present. The sensing process itself is also relatively slow, typically requiring more than 100 milliseconds per detection cycle, which places an upper bound on the speed at which the conveyor can operate without sacrificing detection reliability.

Various alternative approaches have been explored to address these shortcomings. Weight-based sensor systems, embedded in or beneath the conveyor surface, attempt to detect occupancy by measuring the force exerted by an item on the belt. However, these systems are unreliable when handling lightweight objects, as the weight differential between an occupied and unoccupied belt section may fall below the sensor's detection threshold. Weight-based systems are also susceptible to vibration-induced noise, which is inherent in conveyor operation and further degrades their ability to distinguish between a lightweight item and normal belt movement. Ultrasonic detectors have been employed as another alternative, using sound waves reflected off objects to determine occupancy. These detectors struggle with thin or flat items that present minimal surface area for sound wave reflection, and their performance is affected by environmental factors such as ambient noise, air currents, and temperature variations that alter the speed of sound and introduce measurement errors.

High-precision laser array systems represent a more advanced approach, offering improved detection accuracy relative to standard photo-based sensors. However, laser arrays introduce substantial cost, both in initial hardware procurement and in ongoing maintenance. These systems require regular calibration to maintain accuracy, and the precise alignment of multiple laser emitters and receivers across the conveyor width is labor-intensive and sensitive to the same mechanical drift that affects simpler sensor configurations. As conveyor systems age, belt material stretches, rollers develop imbalances, and structural components shift, all of which alter the spatial relationship between the detection hardware and the conveyor surface. This drift necessitates increasingly frequent maintenance interventions to re-establish proper alignment and tension. In production environments where conveyors operate continuously and handle high volumes of items with varying profiles and weights, none of the existing approaches provides a detection solution that is simultaneously fast, reliable across a range of item types, tolerant of normal mechanical variation, and economical to deploy and maintain.

### SUMMARY

The present disclosure relates to a conveyor surface monitoring system and method that employs an image capture device and an embedded processor to determine, in substantially real time, the occupancy status of discrete zones across a conveyor surface. The system acquires one or more reference image(s) representing the conveyor surface in an unoccupied state and constructs a background model of the reference image using statistical modeling techniques, such as mixture-of-Gaussians distributions computed over pixel intensity values. During operation, the image capture device, which may comprise a power-over-Ethernet camera mounted to observe the conveyor surface, captures successive images at acquisition intervals of approximately 40 to 50 milliseconds. The embedded processor defines a plurality of configurable regions of interest across the captured images, each region of interest being subdivided into a plurality of zones corresponding to physical sub-regions of the conveyor surface. For each acquisition cycle, the processor computes difference metrics between pixel values of the current image and corresponding pixel values of the background model for each zone, compares the difference metrics against one or more threshold values, and classifies each zone as occupied or unoccupied based on the comparison. The processor generates an occupancy bitmask comprising bits corresponding to the occupancy status of each respective zone and transmits the occupancy bitmask to a controller via a communication interface. The controller utilizes the occupancy bitmask to control various aspects associated with automated picking operations. For example, the occupancy status and/or bitmask may be used to control the conveyor imaged by the image capture device, one or more robotic picking units, additional upstream and/or downstream conveyors, among other related equipment as would be apparent to one of ordinary skill in the art.

The system further provides adaptive configuration of zone parameters, including zone size and zone count, based on characteristics of expected objects and conveyor speed. A graphical user interface enables a user to define and adjust zone boundaries by displaying the reference image or a current image of the conveyor surface. The system also implements stall detection by analyzing successive occupancy bitmasks over time to identify persistent occupancy patterns indicative of an object that has ceased to move along the conveyor surface. When a persistent occupancy pattern satisfying predefined temporal criteria is detected, the system generates a stall condition signal that may be communicated to the controller or to an operator interface.

The disclosed system and method improve upon prior sensor-based conveyor monitoring approaches, which typically employ linear sensor arrays mounted in close proximity to the conveyor surface and which exhibit response times on the order of 100 milliseconds or greater. Such prior approaches require precise mounting tolerances relative to the conveyor surface and are susceptible to degraded performance resulting from belt vibration, belt stretch, and mechanical wear over time. Prior linear sensor arrangements also exhibit reduced detection reliability when encountering thin, flat, or lightweight parcels that produce minimal sensor response. By contrast, the image-based approach of the present disclosure operates at acquisition rates that support higher conveyor throughput, does not require close-proximity mounting to the conveyor surface, utilizes commodity imaging hardware and embedded processing hardware, integrates with existing controller infrastructure through standardized communication interfaces, and provides reliable detection across a range of object form factors including thin and flat parcels. The configurable zone definitions, adaptive zone sizing, and integrated stall detection further reduce the need for manual calibration and ongoing maintenance associated with prior mechanical and optical sensor installations.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
**FIG. 1** illustrates a network architecture for an occupancy detection system in accordance with an exemplary embodiment of the invention.
**FIG. 2** illustrates a system architecture for an occupancy detection system in accordance with an exemplary embodiment of the present invention.
**FIG. 3** illustrates an exemplary computer implemented process for an occupancy detection system according to one embodiment of the invention.
**FIG. 4** illustrates one embodiment of the computing architecture that supports an embodiment of the inventive disclosure.
**FIG. 5** illustrates components of a system architecture that supports an embodiment of the inventive disclosure.
**FIG. 6** illustrates components of a computing device that supports an embodiment of the inventive disclosure.
**FIG. 7** illustrates components of a computing device that supports an embodiment of the inventive disclosure.

### DETAILED DESCRIPTION

One or more different embodiments may be described in the present application. Further, for one or more of the embodiments described herein, numerous alternative arrangements may be described; it should be appreciated that these are presented for illustrative purposes only and are not limiting of the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural, logical, software, electrical and other changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more of the aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements.

Headings of sections provided in this patent application and the title of this patent application are for convenience only and are not to be taken as limiting the disclosure in any way.

Devices that are in communication with each other need not be in continuous communication with each other, unless expressly specified otherwise. In addition, devices that are in communication with each other may communicate directly or indirectly through one or more communication means or intermediaries, logical or physical.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

The detailed description set forth herein in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

### Network Architecture

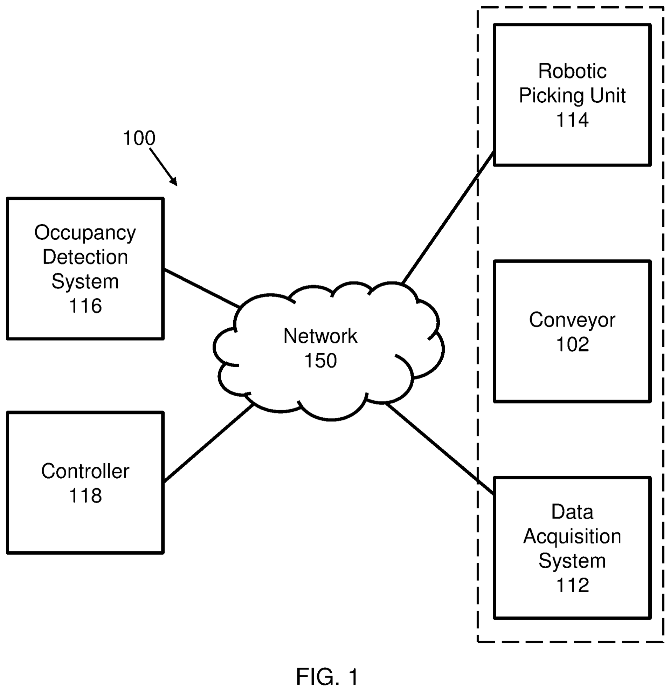

**FIG.** 1 illustrates an exemplary embodiment of an occupancy detection system 100 according to one embodiment. The system comprises conveyance system 102, data acquisition device 112, robotic picking unit 114, occupancy detection system 116, controller 118 and network 150 communicatively coupling the components. The various components described herein are exemplary and for illustration purposes only and any combination or subcombination of the various components may be used as would be apparent to one of ordinary skill in the art. The system may be reorganized or consolidated, as understood by a person of ordinary skill in the art, to perform the same tasks on one or more other servers or computing devices without departing from the scope of the invention.

At a high level, the data acquisition device 112 comprises a camera positioned to capture images of at least a portion of the conveyance surface. The data acquisition device 112 is communicatively coupled to the network and is configured to transmit two-dimensional RGB image data frames at a configurable acquisition rate. The data acquisition device 112 may receive both electrical power and network connectivity through a single Ethernet connection, thereby reducing cabling infrastructure and simplifying installation within the conveyance system environment. The data acquisition device 112 may be mounted at a fixed position relative to the conveyance surface such that the field of view encompasses a defined region of interest on the conveyor, enabling consistent spatial registration between successively captured image frames.

The data acquisition device 112 generally operates in at least two capture modes. In a first mode, the data acquisition device 112 captures one or more reference images when the conveyance surface is unoccupied, thereby establishing a baseline visual representation of the empty conveyor within the field of view. In a second mode, the data acquisition device 112 captures current operational images during active conveyance system operation, wherein items, packages, or other objects may be present on the conveyance surface. The raw visual data produced by the data acquisition device 112 in both modes is transmitted over the network as sequential image data frames, each frame comprising pixel-level color information encoded across red, green, and blue channels. The configurable acquisition rate of the data acquisition device 112 may be adjusted to accommodate varying conveyor speeds, throughput requirements, or processing constraints of downstream components within the system architecture.

The data acquisition device 112 functions by employing an image sensor array that converts incident light reflected from the conveyance surface and any objects thereon into digital pixel data. Upon each acquisition cycle, the image sensor captures a complete frame of RGB data at a resolution determined by the sensor configuration, and a network interface controller packetizes the image data for transmission over a communication connection to one or more processing components coupled to the network. The reference images and current operational images transmitted by the data acquisition device 112 provide the raw visual data upon which occupancy detection processing is performed by downstream modules. In alternative embodiments, the data acquisition device 112 may comprise a USB-connected camera powered by a separate power supply, an IP camera utilizing Wi-Fi connectivity for wireless transmission of image data, a GigE Vision-compliant industrial camera, or a camera employing a Camera Link interface coupled to a frame grabber. The data acquisition device 112 may alternatively capture monochrome image data, hyperspectral image data, or depth-augmented image data using a stereoscopic camera pair or a structured-light sensor. The configurable acquisition rate may be implemented through software-based frame rate control, hardware triggering synchronized with conveyor encoder signals, or external trigger inputs received from a controller associated with the conveyance system.

At a high level, the occupancy detection system 116 comprises one or more processors and memory storing executable instructions configured to process image data received from the data acquisition device. The occupancy detection system 116 is communicatively coupled to the network 150 for receiving image data captured by one or more imaging devices and for transmitting occupancy status information to the controller via the network 150. The occupancy detection system 116 operates as an intermediary processing layer that transforms raw image data into structured occupancy determinations suitable for consumption by downstream control and monitoring components within the broader system architecture.

The occupancy detection system 116 is operable to execute a plurality of computer vision algorithms to determine whether defined spatial regions within a monitored environment are occupied or unoccupied. The processing pipeline implemented by the occupancy detection system 116 may comprise background modeling using mixture-of-Gaussians distributions, which maintains a statistical representation of the scene background by modeling each pixel location as a weighted sum of Gaussian probability density functions. The mixture-of-Gaussians model adapts over time to account for gradual changes in lighting conditions, environmental variations, and other non-stationary background phenomena. The occupancy detection system 116 may compute difference metrics between current image frames and reference images or the background model, where the difference metrics quantify the degree of deviation between an observed scene state and the expected background state. Based on the computed difference metrics, the occupancy detection system 116 performs zone-based occupancy classification, wherein predefined spatial zones within the image field of view are individually evaluated to determine an occupancy state for each zone. The occupancy detection system 116 generates a bitmask encoding the occupancy classification results, where each bit or group of bits within the bitmask corresponds to a respective spatial zone and indicates whether that zone is determined to be occupied or unoccupied. The generated bitmask is transmitted via the network 150 to the controller for further processing and action.

In alternative embodiments, the occupancy detection system 116 may employ background modeling techniques other than mixture-of-Gaussians distributions, including kernel density estimation, codebook-based background models, principal component analysis-based subspace models, or neural network-based background subtraction approaches. The difference metric computation may alternatively utilize absolute frame differencing, structural similarity index measures, histogram comparison methods, or optical flow-based motion estimation rather than direct pixel-level comparison against reference images. The zone-based occupancy classification may alternatively be performed using machine learning classifiers such as support vector machines, random forests, or convolutional neural networks trained on labeled occupancy data, or may employ threshold-based decision logic applied to aggregated difference metric values within each zone. The bitmask generation may alternatively be replaced with structured data formats such as JSON objects, XML documents, or protocol buffer messages encoding occupancy state information for each zone. The occupancy detection system 116 may alternatively be implemented as a distributed processing architecture wherein multiple processors each handle a subset of spatial zones, or as a cloud-based processing service communicatively coupled to the network 150 rather than as a locally deployed processing unit.

At a high level 118 is a controller configured as an industrial control device communicatively coupled to the network and arranged to receive occupancy bitmasks from the occupancy detection system at refresh rates sufficient to coordinate real-time robotic operations within the material handling environment. The controller 118 functions as an intermediary processing element that translates spatial occupancy data encoded within bitmask representations into actionable control signals directed to associated robotic picking units and other automated equipment operating in association with the conveyance surface, such as, but not limited to upstream equipment for feeding objects to a pick area (e.g. object sorters, other conveyors), and/or downstream equipment for moving placed objects (e.g. induction conveyors). The controller 118 maintains a mapping structure that associates discrete input addresses within its internal register space to corresponding spatial positions along the conveyance surface, where each bit position within a received occupancy bitmask corresponds to a defined physical zone or cell location on the conveyor. By maintaining this address-to-position mapping, the controller 118 is able to resolve incoming bitmask data into a spatially coherent representation of object presence and absence across the conveyance surface, thereby enabling precise coordination of robotic pick-and-place sequences in temporal alignment with object movement.

The controller 118 processes the received occupancy data through a scan-cycle-based execution model in which bitmask values are read into input registers, evaluated against programmed logic routines, and used to generate output control signals that direct robotic picking unit motion profiles, gripper actuation timing, and trajectory planning parameters. The controller 118 further implements exception monitoring logic configured to detect anomalous conditions on the conveyance surface, including but not limited to stalled objects that persist in a detected state across a threshold number of acquisition cycles. When the controller 118 determines that a particular bitmask bit remains asserted beyond the configured cycle threshold without corresponding downstream clearance, the controller 118 generates an exception signal that may trigger fault handling routines, operator alerts, or automated recovery sequences such as conveyor speed adjustments or alternative routing commands.

The controller 118 may comprise a programmable logic controller (PLC). The controller 118 may be replaced or supplemented by an industrial PC running a soft-PLC runtime environment, a field-programmable gate array (FPGA) module configured to perform bitmask processing with deterministic latency characteristics, or a dedicated embedded microcontroller platform executing real-time operating system (RTOS) firmware. The address-to-position mapping maintained by the controller 118 may alternatively be implemented as a lookup table stored in non-volatile memory, a dynamically configurable register map updated through network-based configuration commands, or a hardware-defined pin mapping established through physical wiring topology. The exception detection logic for stalled object identification may alternatively employ time-based watchdog timers rather than cycle-count thresholds, statistical analysis of bitmask transition frequencies over sliding observation windows, or machine-learning-based anomaly detection models executing on a co-processor communicatively coupled to the controller 118 through the network.

At a high level, the robotic picking unit 114 comprises a multi-jointed robotic arm equipped with an end effector that is configured to pick objects from a source location and place those objects onto designated positions on the conveyance surface. Although described herein with particular emphasis on a robotic picking unit 114, the control techniques may be applied to various other equipment associated with the object movement process, including, but not limited to, upstream and/or downstream conveyors, sorters and the like, other robotic picking units, and/or other equipment associated with moving objects towards and/or away from a given pick area or pick cell. The robotic picking unit 114 is communicatively coupled to the controller and receives control signals derived from occupancy bitmask data that represents the real-time occupation state of discrete sub-regions across the conveyance surface. Based on these control signals, the robotic picking unit 114 selectively enables or inhibits placement operations such that objects are deposited only onto sub-regions identified as non-occupied within the bitmask data structure. The robotic picking unit 114 functions within parcel induction operations where parcels or other objects are introduced onto a moving or stationary conveyance surface in a controlled and spatially coordinated manner.

The robotic picking unit 114 operates in at least an automated mode and a semi-automated mode. In the automated mode, the robotic picking unit 114 autonomously determines placement coordinates on the conveyance surface by interpreting the occupancy bitmask data received from the controller, computing available non-occupied sub-regions, and executing pick-and-place trajectories without operator intervention. In the semi-automated mode, the robotic picking unit 114 may receive operator input or confirmation prior to executing placement operations, or may rely on operator guidance for object selection while autonomously determining placement positions based on the bitmask data. The multi-jointed robotic arm of the robotic picking unit 114 provides multiple degrees of freedom, enabling the end effector to reach various positions and orientations relative to the conveyance surface so as to accommodate objects of differing geometries and to place objects at sub-regions distributed across the width and length of the conveyance surface.

The end effector of the robotic picking unit 114 may be implemented as a vacuum-based suction gripper, a mechanical jaw gripper, a magnetic gripper, an adaptive finger gripper, or a hybrid gripper combining two or more gripping modalities. The multi-jointed robotic arm of the robotic picking unit 114 may be implemented as a six-axis articulated arm, a four-axis SCARA-type arm, a delta-type parallel kinematic robot, a Cartesian gantry-style robot, or a collaborative robotic arm with force-sensing joints. The communication interface between the robotic picking unit 114 and the controller may be implemented using EtherNet/IP, PROFINET, EtherCAT, Modbus TCP, DeviceNet, or a proprietary serial communication protocol. The control signals provided to the robotic picking unit 114 may be transmitted as discrete digital I/O signals, as structured data packets over an industrial fieldbus, or as messages conforming to an OPC Unified Architecture protocol. The robotic picking unit 114 may alternatively be replaced by a gantry-mounted pick-and-place mechanism, a pneumatically actuated placement device, or a human operator working in conjunction with an augmented reality display that visually indicates non-occupied sub-regions on the conveyance surface based on the occupancy bitmask data.

At a high level, the conveyance system 102 (also referred to as a conveyor) provides a conveyance surface configured to transport objects along a direction of conveyance. The conveyance system 102 operates as the physical substrate upon which objects are placed, transported, and monitored throughout the sorting, picking, or distribution process. The conveyance system 102 interfaces with other components of the broader system architecture by communicating operational parameters to the network, thereby enabling coordinated behavior between the conveyance system 102, the data acquisition device, and the robotic picking unit. The conveyance surface of the conveyance system 102 defines the spatial domain over which zone-based occupancy analysis is performed, and upon which the robotic picking unit deposits objects in response to occupancy status determinations.

The conveyance system 102 may comprise a belt conveyor having a continuous moving belt platform that defines the conveyance surface. The belt platform moves objects placed thereon along the direction of conveyance at a belt speed that may be fixed or variable depending on system throughput demands. The conveyance system 102 communicates operational parameters, including but not limited to belt speed, to the network, where such parameters are utilized in adaptive zone configuration. For instance, changes in belt speed reported by the conveyance system 102 may prompt recalculation of zone boundaries, adjustment of zone dimensions, or modification of timing intervals used by the data acquisition device when capturing spatial data of the conveyance surface. The conveyance system 102 thereby participates in a feedback arrangement wherein its real-time operational state informs the configuration and behavior of upstream and/or downstream system components.

The conveyance surface of the conveyance system 102 serves as the monitored region over which the data acquisition device acquires spatial or image data to determine occupancy status of defined zones. When the robotic picking unit receives placement instructions derived from occupancy analysis, it deposits objects onto the conveyance surface of the conveyance system 102 at locations corresponding to zones identified as unoccupied or having available capacity. The conveyance system 102 then transports the placed objects along the direction of conveyance toward a downstream destination. As an alternative to a belt conveyor, the conveyance system 102 may comprise a roller conveyor having a series of driven or gravity-fed rollers that collectively define the conveyance surface and transport objects along the direction of conveyance. As a further alternative, the conveyance system 102 may comprise a chain-driven slat conveyor in which a plurality of slats connected by chains form the conveyance surface and move objects in the direction of conveyance.

Network cloud 150 generally represents a network or collection of networks (such as the Internet or a corporate intranet, or a combination of both) over which the various components illustrated in **FIG. 1** (including other components that may be necessary to execute the system described herein, as would be readily understood to a person of ordinary skill in the art). In particular embodiments, network 150 is an intranet, an extranet, a virtual private network (VPN), a local area network (LAN), a wireless LAN (WLAN), a wide area network (WAN), a metropolitan area network (MAN), a portion of the Internet, or another network 150 or a combination of two or more such networks 150. One or more links connect the systems and databases described herein to the network 150. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable network 150, and any suitable link for connecting the various systems and databases described herein.

The network 150 connects the various systems and computing devices described or referenced herein. In particular embodiments, network 150 is an intranet, an extranet, a virtual private network (VPN), a local area network (LAN), a wireless LAN (WLAN), a wide area network (WAN), a metropolitan area network (MAN), a portion of the Internet, or another network 421 or a combination of two or more such networks 150. The present disclosure contemplates any suitable network 150.

One or more links couple one or more systems, engines or devices to the network 150. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable links coupling one or more systems, engines or devices to the network 150.

In particular embodiments, each system or engine may be a unitary server or may be a distributed server spanning multiple computers or multiple datacenters. Systems, engines, or modules may be of various types, such as, for example and without limitation, web server, news server, mail server, message server, advertising server, file server, application server, exchange server, database server, or proxy server. In particular embodiments, each system, engine or module may include hardware, software, or embedded logic components or a combination of two or more such components for carrying out the appropriate functionalities implemented or supported by their respective servers. For example, a web server is generally capable of hosting websites containing web pages or particular elements of web pages. More specifically, a web server may host HTML files or other file types, or may dynamically create or constitute files upon a request, and communicate them to client/user devices or other devices in response to HTTP or other requests from client devices or other devices. A mail server is generally capable of providing electronic mail services to various client devices or other devices. A database server is generally capable of providing an interface for managing data stored in one or more data stores.

In particular embodiments, one or more data storages may be communicatively linked to one or more servers via one or more links. In particular embodiments, data storages may be used to store various types of information. In particular embodiments, the information stored in data storages may be organized according to specific data structures. In particular embodiments, each data storage may be a relational database. Particular embodiments may provide interfaces that enable servers or clients to manage, e.g., retrieve, modify, add, or delete, the information stored in data storage.

The system may also contain other subsystems and databases, which are not illustrated in **FIG. 1**, but would be readily apparent to a person of ordinary skill in the art. For example, the system may include databases for storing data, storing features, storing outcomes (training sets), and storing models. Other databases and systems may be added or subtracted, as would be readily understood by a person of ordinary skill in the art, without departing from the scope of the invention.

### System Architecture

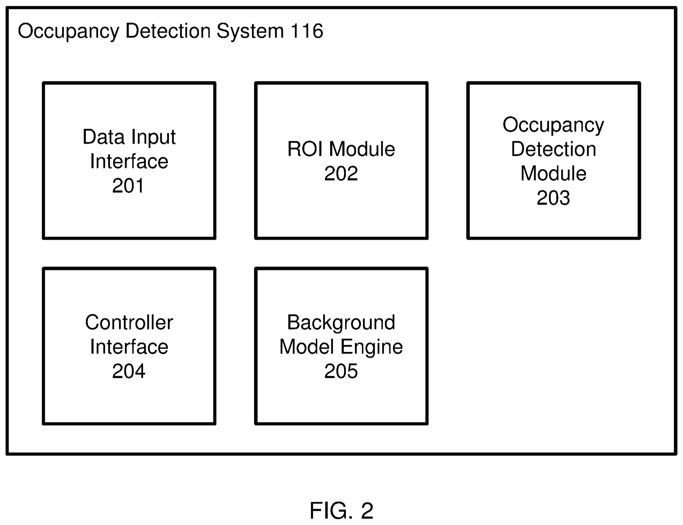

**FIG. 2** illustrates an exemplary embodiment of the occupancy detection system. The system comprises data input interface 201, region of interest module 202, occupancy detection module 203, controller interface 204, and background model engine 205. The various components described herein are exemplary and for illustration purposes only and any combination or subcombination of the various components may be used as would be apparent to one of ordinary skill in the art. Other systems, interfaces, modules, engines, databases, and the like, may be used, as would be readily understood by a person of ordinary skill in the art, without departing from the scope of the invention. Any system, interface, module, engine, database, and the like may be divided into a plurality of such elements for achieving the same function without departing from the scope of the invention. Any system, interface, module, engine, database, and the like may be combined or consolidated into fewer of such elements for achieving the same function without departing from the scope of the invention. All functions of the components discussed herein may be initiated manually or may be automatically initiated when the criteria necessary to trigger action have been met.

At a high level, data input interface 201 serves as a front-end software subsystem that facilitates the ingestion of image data frames from one or more data acquisition devices into the broader processing pipeline. The data input interface 201 operates as an intermediary layer positioned between external hardware-based image capture apparatus and downstream software processing modules, thereby abstracting the complexities of network-level data retrieval and presenting a uniform programmatic interface through which subsequent subsystems may obtain structured image data. An aspect of the invention is comprised of the data input interface 201 being configured to handle 2D RGB image data, wherein each image data frame comprises a multi-channel pixel array representing red, green, and blue color components across a two-dimensional spatial domain.

In operation, the data input interface 201 establishes and maintains one or more communication sessions with the data acquisition device using network communication protocols, which may include but are not limited to TCP/IP, UDP, GigE Vision, or proprietary streaming protocols suited to the particular data acquisition hardware employed. Upon receipt of incoming data packets, the data input interface 201 performs frame integrity validation, which in one embodiment includes verification of packet sequence numbers, cyclic redundancy checks, header field parsing, and confirmation that the received payload dimensions correspond to expected frame resolution parameters. The data input interface 201 further performs byte-order normalization, color channel demultiplexing, and data type casting operations to transform raw network payloads into formatted multi-dimensional image arrays suitable for consumption by downstream processing modules. A part of the data input interface 201 includes a buffering mechanism that maintains a configurable circular buffer or queue structure to accommodate transient variations in network throughput and processing latency, thereby promoting continuous image acquisition at the specified sampling rate without frame loss or temporal discontinuity.

In alternative embodiments, the data input interface 201 may be adapted to receive image data through communication channels other than network protocols, including but not limited to shared memory interfaces, direct memory access (DMA) transfers, USB bulk transfer endpoints, or file-based ingestion from local or networked storage media. The data input interface 201 may further be configured to accept image data in formats beyond 2D RGB, such as grayscale, hyperspectral, depth map, or compressed image formats including JPEG, PNG, or H.264/H.265 encoded video streams, wherein an additional decoding stage is incorporated within the data input interface 201 prior to output formatting. In yet another embodiment, the synchronization mechanism of the data input interface 201 may employ hardware-triggered acquisition signals, precision time protocol (PTP) timestamps, or software-based phase-locked loop synchronization schemes to coordinate frame acquisition timing with external events or with other subsystems operating within the invention. The buffering strategy within the data input interface 201 may alternatively utilize GPU-accessible memory pools, memory-mapped file structures, or distributed message queue architectures to accommodate varying deployment configurations and throughput requirements.

At a high level, the region of interest (ROI) module 202 is a software subsystem that defines, manages, and dynamically configures one or more regions of interest within an image coordinate space that corresponds to a physical conveyance surface. An aspect of the invention is comprised of ROI module 202 receiving image frame data, conveyor operational parameters, and user-defined configuration inputs, and in response generating a structured spatial representation of the conveyance surface that delineates where object detection, tracking, and classification operations are to be performed. By constraining downstream processing to defined regions rather than the entirety of the captured image frame, ROI module 202 reduces computational overhead and focuses analytical resources on areas of the conveyance surface where objects of interest are expected to be present.

In operation, ROI module 202 segments a defined region of interest into a plurality of polygonal zones, where each polygonal zone is mapped to a respective physical sub-region of the conveyor surface through a coordinate transformation that accounts for camera perspective, lens distortion parameters, and the geometric relationship between the imaging sensor and the conveyance plane. Each polygonal zone is represented internally as an ordered set of vertex coordinates in both image space and physical space, and ROI module 202 maintains a bidirectional mapping between these coordinate systems such that pixel-level detections can be translated to physical locations on the conveyor and vice versa. Zone boundaries are configurable through a graphical user interface (GUI) that permits an operator to define, modify, add, or remove polygonal zones by manipulating vertex handles overlaid on a live or captured image of the conveyance surface. A part of the functionality of ROI module 202 includes persisting zone configurations to a data store such that zone definitions survive system restarts and can be recalled, versioned, or transferred between installations.

An aspect of ROI module 202 includes an adaptive adjustment mechanism that modifies the number and spatial extent of the polygonal zones based on one or more operational parameters, including but not limited to expected object dimensions, conveyor speed, object throughput rate, and image resolution. For example, when conveyor speed increases beyond a configurable threshold, ROI module 202 may subdivide existing zones into smaller polygonal sub-zones to maintain a desired spatial granularity for object detection, or conversely merge adjacent zones when conveyor speed decreases or when objects of larger expected dimensions are being processed. The adaptive adjustment may be performed in response to real-time sensor inputs, operator commands received through the GUI, or programmatic instructions from other subsystems. In alternative embodiments, the region of interest managed by ROI module 202 may be defined using non-polygonal geometric primitives such as elliptical regions, spline-bounded regions, or rasterized binary masks rather than strictly polygonal zones. In further alternative embodiments, the zone segmentation may be performed automatically using machine learning models trained on historical conveyor imagery, or the coordinate mapping may employ homography matrices, affine transformations, or lookup tables in place of analytical geometric transformations. The GUI-based configuration interface of ROI module 202 may alternatively be replaced or supplemented by a programmatic API, a configuration file parser, or an automated calibration routine that defines zone boundaries based on fiducial markers placed on the conveyance surface.

At a high level, occupancy detection module 203 is a software subsystem that receives image data from one or more image capture devices and applies computer vision techniques to ascertain whether defined spatial zones within a monitored environment are occupied or unoccupied. An aspect of the invention is comprised of occupancy detection module 203 operating as a processing pipeline that ingests frame-level pixel data, maintains and updates a statistical background model, derives foreground segmentation masks, and outputs per-zone occupancy classification signals that may be consumed by downstream subsystems for further decision-making, alerting, or data logging purposes.

In operation, occupancy detection module 203 may maintain a background model comprising mixture-of-Gaussians (MoG) distributions over pixel intensities for each pixel location within the image frame. Additional details of the background model are discussed below in association with the background model engine 205. For each incoming frame, occupancy detection module 203 computes difference metrics between the current observed pixel values and the corresponding background model. Likelihood values are derived from these multimodal background distributions, and occupancy detection module 203 generates binary foreground masks by applying thresholding operations to the computed likelihood values, wherein pixels exhibiting sufficiently low likelihood under the background model are labeled as foreground. The foreground masks are then spatially partitioned according to predefined zone boundaries, and occupancy detection module 203 aggregates the foreground pixel counts within each zone. A zone is classified as occupied when the aggregated foreground pixel count for that zone meets or exceeds a configurable threshold value, and is classified as unoccupied otherwise. The configurable threshold may be expressed as an absolute pixel count or as a fractional proportion of the total pixel area assigned to the respective zone. An aspect of the invention is comprised of occupancy detection module 203 adaptively updating the mixture-of-Gaussians background model parameters over time using online learning rates, thereby accommodating gradual illumination changes and quasi-static scene variations while preserving sensitivity to transient occupancy events.

In alternative embodiments, occupancy detection module 203 may employ background modeling techniques other than mixture-of-Gaussians distributions, including but not limited to kernel density estimation (KDE) over pixel intensity histories, codebook-based background models wherein each pixel maintains a set of codeword entries representing observed intensity clusters, or neural network-based background subtraction models such as convolutional autoencoders trained to reconstruct background imagery and flag reconstruction-error regions as foreground. In further alternatives, occupancy detection module 203 may supplement or replace pixel-level foreground analysis with object detection approaches including deep learning-based detectors such as region-based convolutional neural networks (R-CNN), single-shot multibox detectors (SSD), or transformer-based architectures that directly localize and classify persons or objects within zone boundaries. In yet another alternative, occupancy detection module 203 may utilize optical flow estimation, temporal differencing across consecutive frames, or depth-based segmentation using stereo or time-of-flight sensor data as a basis for occupancy determination. The zone classification logic within occupancy detection module 203 may alternatively incorporate morphological filtering operations-such as erosion and dilation-applied to the foreground masks prior to pixel aggregation, connected component analysis to distinguish discrete occupied regions, or temporal smoothing filters such as hysteresis thresholding or finite-state machines that require sustained foreground evidence over multiple consecutive frames before transitioning a zone's occupancy state.

At a high level, controller interface 204 serves as a communication bridge between the vision-based zone occupancy detection subsystem and a controller that governs robotic or automated material handling operations. An aspect of the invention is comprised of a software module that translates zone-level occupancy determinations into structured digital data formats suitable for ingestion by industrial control hardware, thereby enabling coordinated actuation decisions based on the spatial distribution of objects along a conveyance surface.

In operation, controller interface 204 constructs occupancy bitmasks wherein each bit position corresponds to a respective spatial zone defined along the conveyance surface. When a given zone is determined to be occupied by one or more objects, the corresponding bit in the bitmask is set to a logical high state; conversely, when a zone is determined to be unoccupied, the corresponding bit is set to a logical low state. The module maps each respective bitmask bit to a discrete input address within the controller's memory space, where each discrete input address corresponds to a defined spatial position or region along the conveyance surface. This mapping may be configured through a lookup table, a configuration file, or a programmatic assignment that associates zone identifiers with controller register addresses. Upon assembly of the bitmask, controller interface 204 transmits the bitmask data to the controller over an industrial communication protocol, and the controller thereafter reads the discrete input states to inform robotic pick-and-place sequencing, divert logic, or other automated responses. Although described herein with an emphasis on controlling robotic pick and place operations, the controller interface may be adapted for providing control signals to other system components (upstream and/or downstream) associated with picking operations such as infeed equipment, sorters, and/or other conveyors.

A part of the operational characteristics of controller interface 204 includes maintaining communication refresh rates on the order of milliseconds (e.g. approximately 40 to 50 milliseconds) per update cycle, which facilitates near-real-time coordination between the perception layer and the control layer. This refresh interval may be adapted based on system throughput requirements, controller scan cycle timing, or network bandwidth constraints. The communication channel between controller interface 204 and the controller may employ any of several industrial communication protocols, including but not limited to EtherNet/IP, Modbus TCP, PROFINET, OPC-UA, or proprietary serial interfaces. In alternative embodiments, controller interface 204 may transmit occupancy data as multi-bit word registers rather than individual discrete inputs, or may encode additional metadata such as zone confidence scores, object counts per zone, or timestamps within supplemental data fields transmitted alongside the bitmask. In further alternatives, controller interface 204 may interface with a distributed control system (DCS), a remote terminal unit (RTU), a fieldbus coupler, or a software-based soft controller executing on an industrial PC, rather than a dedicated hardware controller, without departing from the scope of the disclosed invention.

At a high level, background model engine 205 is a software subsystem that constructs, maintains, and adaptively refines a statistical representation of an unoccupied conveyance surface appearance. An aspect of the invention is comprised of background model engine 205 operating as a computational module that receives reference image data depicting the conveyance surface in its baseline, unoccupied state and derives a probabilistic model encoding the expected visual characteristics of that surface across spatial locations. The background model engine 205 serves as a foundational element within the broader system architecture by providing a continuously updated background representation against which subsequent image frames may be compared for the purpose of detecting the presence of foreign objects or items placed upon the conveyance surface.

The background model engine 205 may process one or more reference images of the conveyance surface and generate a per-pixel statistical model characterizing the expected intensity and color distributions at each spatial location within the field of view. A part of the functionality of background model engine 205 includes accounting for inherent surface irregularities such as texture variations, seams, wear patterns, and localized discolorations that may be present on the conveyance surface, as well as accommodating variations in ambient lighting conditions that may cause gradual shifts in observed pixel values over time. The background model engine 205 outputs model parameters that collectively define a multi-modal probability density function for each pixel, thereby enabling downstream subsystems to evaluate whether observed pixel values in subsequent frames are consistent with the learned background model or are instead indicative of an object occupying the surface.

The background model engine 205 may employ a mixture-of-Gaussians (MOG) framework in which each pixel location is modeled by a weighted combination of K Gaussian distributions, where each Gaussian component is parameterized by a mean vector, a covariance matrix, and a mixing weight. During initialization, background model engine 205 processes a set of reference frames to estimate initial values for these parameters using expectation-maximization or an online approximation thereof. As new reference frames or environmental observations are ingested, background model engine 205 updates the model parameters incrementally using a learning rate that controls the balance between retaining historical background statistics and adapting to gradual environmental drift, such as changes in overhead illumination intensity or color temperature. A part of the update mechanism within background model engine 205 includes evaluating whether incoming pixel observations match any existing Gaussian component within a defined Mahalanobis distance threshold, and if a match is found, the corresponding component's mean, variance, and weight are adjusted accordingly, while unmatched components may have their weights decremented or may be replaced by new components initialized from the observed data.

Regarding alternatives that may be employed in place of or in conjunction with the mixture-of-Gaussians approach within background model engine 205, an aspect of the invention contemplates the use of alternative background modeling techniques including, but not limited to, single Gaussian models per pixel for computationally constrained environments, kernel density estimation (KDE) methods that maintain a non-parametric representation of the background distribution using a buffer of recent sample values, codebook-based models in which each pixel's background is represented by a set of codewords encoding allowable intensity ranges, median-based models that compute a running median filter over temporal pixel observations, and neural network-based background models such as autoencoders trained to reconstruct the background appearance and flag reconstruction errors as foreground. An additional alternative within the scope of background model engine 205 includes the use of adaptive single-mode models augmented with shadow detection heuristics, as well as ViBe (Visual Background Extractor) approaches that employ stochastic sample replacement and spatial diffusion mechanisms for background maintenance. The selection among these alternatives may be guided by the computational budget available, the degree of multimodality present in the background pixel distributions, and the expected rate of environmental change within the deployment setting.

### Computer Implemented Process

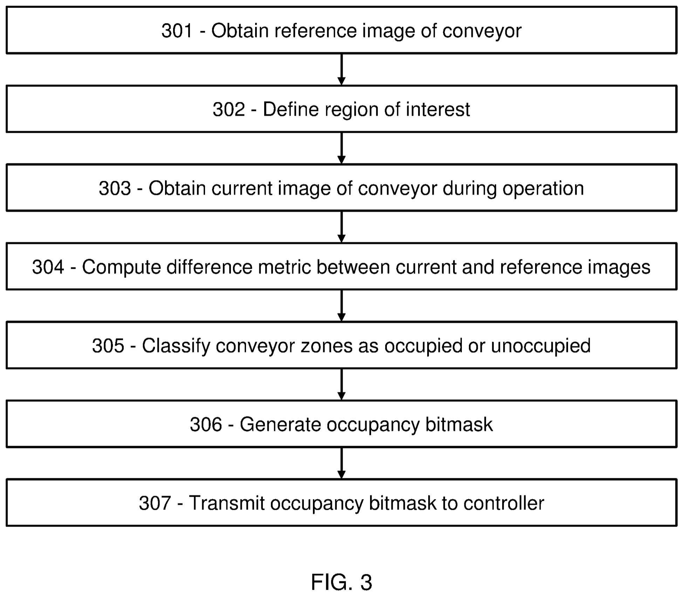

**FIG. 3** illustrates a computer-implemented process for determining occupancy of a conveyance surface and providing occupancy data to control a robotic picking unit. The process comprises obtaining a reference image of the conveyance surface 301; defining a region of interest comprising a plurality of zones mapped to physical sub-regions 302; obtaining a current image of the conveyance surface during operation 303; computing a difference metric between current image pixel values and the reference image or background model for each zone 304; classifying each zone as occupied or unoccupied based on the difference metric relative to a threshold 305; generating an occupancy bitmask with bits corresponding to zone occupancy status 306; and transmitting the occupancy bitmask to the programmable logic controller for robotic control 307. The process steps described herein may be performed in association with a system such as that described in FIG. 1 and/or FIG. 2 above or in association with a different system. The process may comprise additional steps, fewer steps, and/or a different order of steps without departing from the scope of the invention as would be apparent to one of ordinary skill in the art.

At 301, the processor obtains at least one reference image of the conveyance surface from the data acquisition device when the conveyance surface is unoccupied. The conveyance surface may comprise, for example, a conveyor belt, a checkout counter, a shelf surface, a transport platform, or any other surface upon which items may be placed or transported. The data acquisition device may comprise one or more imaging sensors such as a camera, a depth sensor, a multispectral sensor, a stereo camera pair, or a combination thereof, positioned to capture a field of view encompassing at least a portion of the conveyance surface. The reference image is captured during a state in which no objects, items, or other occlusions are present on the conveyance surface, thereby providing a baseline representation of the unoccupied surface as it appears under prevailing environmental conditions including ambient lighting, surface texture, color characteristics, and any static features or markings on the conveyance surface. In some embodiments, the processor obtains a plurality of reference images over a temporal window to account for transient variations in illumination or sensor noise, and the plurality of reference images may be aggregated, averaged, or otherwise combined to produce a more robust baseline representation. The processor may obtain the at least one reference image in response to a triggering event such as system initialization, a calibration command, a scheduled recalibration interval, or detection of a change in environmental conditions.

At 301, the processor stores the reference image pixel data in memory, which may comprise volatile memory such as RAM, non-volatile memory such as flash storage or a hard disk drive, or a combination thereof. The pixel data may include intensity values across one or more color channels (e.g., red, green, and blue channels, grayscale intensity, or HSV components), depth values, infrared intensity values, or any other per-pixel measurements provided by the data acquisition device. The processor then initializes a background model comprising mixture-of-Gaussians distributions defined over pixel intensity values at each location within the image coordinate space corresponding to the conveyance surface. In this mixture-of-Gaussians formulation, each pixel location in the image coordinate space is modeled by a weighted sum of K Gaussian distributions, where K may be a predetermined integer (e.g., between 3 and 7) or may be adaptively determined. Each Gaussian component is parameterized by a mean intensity value, a variance or covariance matrix, and a mixing weight representing the relative contribution of that component to the overall distribution at the given pixel location. The initialization of the background model at 301 may comprise setting the mean of a first Gaussian component at each pixel location to the corresponding pixel intensity value from the reference image, assigning an initial variance based on a predefined constant or computed from the plurality of reference images, and setting the mixing weight of the first component to a value near unity while assigning remaining components lower initial weights with higher initial variances to accommodate future observations.

At 301, the mixture-of-Gaussians background model provides a probabilistic framework for distinguishing background pixels belonging to the conveyance surface from foreground pixels corresponding to objects subsequently placed thereon. As an alternative to the mixture-of-Gaussians approach, the background model initialized at 301 may comprise a single Gaussian distribution per pixel location, a kernel density estimation model, a codebook-based background model in which clusters of pixel intensity values are maintained for each pixel location, a non-parametric background model utilizing sample-based histograms, a neural network-based background subtraction model, a median-based background model, a principal component analysis (PCA) based model that captures dominant modes of background variation, or a running average model with adaptive thresholding. In further alternatives, the background model may employ a Bayesian framework with prior distributions updated via observed pixel intensities, or a robust statistical model such as a mixture of Student-t distributions to provide greater tolerance to outlier observations. The selection among these alternative modeling approaches at 301 may depend on computational resource availability, the degree of environmental variability anticipated at the conveyance surface, the frame rate of the data acquisition device, and the desired sensitivity for detecting objects placed on the conveyance surface.At 302, the processor defines, within the image coordinate space, a region of interest comprising a plurality of zones, wherein each zone corresponds to a respective physical sub-region of the conveyance surface. In this operation, the processor partitions a defined area within the field of view of the imaging device into a plurality of discrete zones that collectively form the region of interest. Each zone represents a spatially bounded area in the image coordinate space that is mapped to a corresponding physical sub-region on the conveyance surface, such as a segment of a conveyor belt, a portion of a roller table, or a discrete lane within a multi-lane transport system. The processor at 302 establishes polygonal zone boundaries based on user configuration parameters received through a graphical user interface (GUI). The GUI presents a visual representation of the image coordinate space, enabling an operator to specify zone geometries by inputting vertex coordinates, dragging boundary edges, selecting from predefined polygonal templates, or adjusting zone dimensions through numerical entry fields. The polygonal zone boundaries may comprise triangular, quadrilateral, pentagonal, hexagonal, or other multi-sided geometric shapes, and the user configuration parameters may include vertex positions, edge lengths, angular orientations, zone labels, zone groupings, and overlap tolerances. The processor stores these user-defined configuration parameters in a data structure, such as a lookup table, a configuration file, or a database record, that associates each zone with its corresponding set of polygonal boundary coordinates within the image coordinate space.

At 302, the processor further maps zone coordinates to discrete input addresses of the controller corresponding to spatial positions along the conveyance surface. This mapping operation establishes a correspondence between each defined zone in the image coordinate space and a specific input address or register within the controller's memory architecture, such that detection events occurring within a given zone can be communicated to the controller as discrete signals referencing the precise spatial position on the conveyance surface where the event was detected. The mapping may be implemented through an address assignment table that pairs each zone identifier with a controller input address, a Modbus register, an EtherNet/IP tag, or a PROFINET I/O slot, depending on the communication protocol employed between the processor and the controller. The processor may perform coordinate transformation operations at 302, including homography transformations, affine transformations, or perspective correction computations, to account for geometric distortions introduced by the camera angle, lens characteristics, or mounting position relative to the conveyance surface, thereby ensuring accurate spatial correspondence between image-space zone coordinates and physical-space positions on the conveyance surface.

In one aspect at 302, the zone boundaries may be defined using non-polygonal geometries, such as circular regions, elliptical regions, spline-based curves, or freeform contours drawn by the operator through the GUI. The region of interest may alternatively be partitioned automatically by the processor using uniform grid subdivision, Voronoi tessellation, or adaptive partitioning algorithms that divide the conveyance surface based on detected object density or traffic flow patterns rather than relying solely on user-specified parameters. In further alternatives at 302, the mapping between zone coordinates and controller input addresses may be accomplished through an intermediary middleware layer, an OPC-UA server, a message broker such as MQTT, or a shared memory interface rather than through direct discrete input address mapping. The zone configuration parameters may alternatively be received through a command-line interface, a RESTful API, a configuration script file in JSON or XML format, or a remote configuration management system rather than through the graphical user interface. The coordinate transformation at 302 may alternatively employ calibration-based mapping using fiducial markers placed on the conveyance surface, encoder-correlated position data from the conveyance system, or machine-learning-based spatial regression models trained on known reference points to establish the correspondence between image coordinates and physical positions along the conveyance surface.

At 303, during operation of the conveyance system, for each acquisition cycle, the processor obtains a current image of the conveyance surface from the data acquisition device. The processor receives image data frames via the data input interface at intervals on the order of milliseconds (e.g. between approximately 40 milliseconds and approximately 50 milliseconds) and stores current image pixel values in a processing buffer for zone-based occupancy analysis. Step 303 provides the processor with a continuously refreshed representation of the conveyance surface, enabling downstream computational modules to assess the spatial distribution and presence of objects, persons, or other entities on or proximate to the conveyance surface in substantially real time. The acquisition cycle at 303 is initiated by the processor issuing a frame request signal to the data acquisition device or, alternatively, by the data acquisition device transmitting frames on a periodic schedule to which the processor synchronizes. The image data frames received at 303 each comprise a two-dimensional array of pixel values encoding at least luminance information corresponding to the field of view encompassing the conveyance surface. Upon receipt, the processor at 303 writes the pixel values of the current image data frame into a designated processing buffer resident in volatile memory, thereby overwriting or supplementing previously stored pixel values from a prior acquisition cycle and making the current image data available for the zone-based occupancy analysis performed in subsequent processing steps.

At 303, the interval between approximately 40 milliseconds and approximately 50 milliseconds corresponds to a frame acquisition rate of approximately 20 to 25 frames per second, which provides temporal resolution sufficient to capture movement dynamics on the conveyance surface while balancing computational throughput and memory bandwidth constraints of the processor. These are merely exemplary time intervals and acquisition rates and faster or slower rates may be used without departing from the scope of the invention as would be apparent to one of ordinary skill in the art.

The data acquisition device at 303 may comprise a camera, such as a visible-spectrum camera, an infrared camera, a depth-sensing camera, a time-of-flight sensor, or a structured-light sensor, positioned to capture a field of view that encompasses at least a portion of the conveyance surface. In alternative embodiments, the data acquisition device at 303 may comprise a stereo camera pair configured to produce disparity-mapped image data, or a LiDAR-based sensor that generates a two-dimensional intensity image representation of the conveyance surface. The image data frames received at 303 may be encoded in a raw pixel format, a compressed format such as JPEG or H.264 intra-frame encoding, or a depth map format, and the processor may perform decompression or format conversion prior to storing the pixel values in the processing buffer.

At 303, the processing buffer may be implemented as a single-frame buffer that holds only the most recently acquired image, or alternatively as a circular buffer or double buffer arrangement that retains a limited number of sequential frames to facilitate temporal comparison or motion estimation in conjunction with the zone-based occupancy analysis. In one embodiment, the processing buffer at 303 is allocated within system RAM accessible to the processor, while in alternative embodiments the processing buffer may reside in dedicated graphics memory, in a field-programmable gate array block RAM, or in on-chip SRAM of an application-specific integrated circuit. The pixel values stored at 303 may represent grayscale intensity values, multi-channel color values such as RGB or YCbCr components, depth values, or a combination thereof, depending on the modality of the data acquisition device. The processor at 303 may additionally apply preprocessing operations to the received image data frames prior to or concurrent with storage in the processing buffer, such as spatial downsampling, region-of-interest cropping, lens distortion correction, or noise filtering, to condition the image data for efficient zone-based occupancy analysis. The acquisition and buffering performed at 303 thereby establishes a temporally current digital representation of the conveyance surface state that serves as the input data substrate for occupancy determination across defined spatial zones of the conveyance surface.

At 304, for each zone of the plurality of zones, the processor computes a difference metric between pixel values of the current image and corresponding pixel values of at least one of the reference image and/or the background model. More specifically, the processor evaluates pixel-level deviations within each defined zone by comparing the current image data against stored representations of the unoccupied state. In one embodiment, the processor performs a pixel-wise subtraction between intensity values or color channel values of the current image and the corresponding intensity values or color channel values of the reference image, thereby producing a raw difference value for each pixel within a given zone. In another embodiment, the processor generates likelihood values from the multimodal background distribution for pixels within each zone, wherein each pixel's current value is evaluated against the parameters of the mixture model (e.g., the Gaussian components, their respective means, variances, and mixture weights) to determine a probability that the observed pixel value belongs to the learned background distribution. Pixels that yield low likelihood values under the multimodal background distribution are identified as deviating from the expected unoccupied appearance, while pixels that yield high likelihood values are considered consistent with the background. In yet another embodiment, the processor employs both the reference image comparison and the background model likelihood evaluation in combination, such that the difference metric for a given pixel reflects both a direct intensity-based deviation and a statistical likelihood-based deviation.

At 304, the processor further aggregates the per-pixel difference measurements across all pixels within each zone to produce a zone-level difference metric indicating deviation from the unoccupied state. The aggregation may be performed by computing a mean, median, weighted average, sum, or percentile-based statistic of the individual pixel-level difference values or likelihood values within the zone boundaries. In one embodiment, the processor computes a mean of the absolute difference values for all pixels in a zone, thereby producing a single scalar zone-level difference metric that represents the average degree of deviation from the reference image or background model within that zone. In another embodiment, the processor computes a ratio or percentage of pixels within the zone whose likelihood values fall below a predetermined threshold, such that the zone-level difference metric reflects the spatial extent of foreground deviation rather than the magnitude of deviation alone. In still another embodiment, the processor applies a weighted aggregation scheme wherein pixels located at different spatial positions within the zone contribute differently to the zone-level metric based on predefined weighting masks or distance-based weighting functions.

At 304, alternatives for computing the difference metric at the pixel level include, but are not limited to, absolute difference computation, squared difference computation, normalized cross-correlation, structural similarity index measurement (SSIM), histogram comparison between the current image region and the reference image region, Mahalanobis distance computation relative to the multimodal background distribution parameters, log-likelihood computation under the Gaussian mixture model, and chi-squared distance between pixel value distributions. Alternatives for the aggregation operation used to derive the zone-level difference metric include root-mean-square aggregation, maximum-value pooling across the zone, truncated mean computation that excludes outlier pixel values, entropy-based aggregation of the pixel-level likelihood values, and histogram-based divergence measures such as Kullback-Leibler divergence or Earth Mover's Distance computed between the distribution of current pixel values within the zone and the distribution of reference pixel values within the same zone. The zone-level difference metric produced at 304 thereby provides a quantitative indication, for each respective zone, of the degree to which the current visual appearance of that zone has changed relative to the learned or stored representation of the unoccupied state.

At 305, the processor compares the computed difference metric for each zone to at least one threshold to classify the zone as occupied or unoccupied. More specifically, at 305, the processor evaluates the difference metric derived from the comparison between a current frame representation and the reference image and/or maintained background model on a per-zone basis, wherein each zone corresponds to a predefined spatial region of the monitored scene. The processor generates a foreground mask by thresholding likelihood values obtained from the multimodal background distribution, wherein each pixel in the current frame is assigned a likelihood value indicating the probability that the pixel belongs to the background model. Pixels having likelihood values that fall below a foreground threshold are designated as foreground pixels in the foreground mask, indicating that those pixels represent deviations from the expected background state. The processor then aggregates the foreground pixels within each zone by computing a count or density of foreground pixels spatially contained within the boundaries of the respective zone. The processor determines whether each zone contains an object by comparing the aggregated foreground pixel count to a classification threshold, wherein a zone is classified as occupied when the aggregated count exceeds the classification threshold and is classified as unoccupied when the aggregated count does not exceed the classification threshold.

At 305, the foreground mask generation may employ per-pixel evaluation against the multimodal background distribution, wherein each pixel's observed value is tested against the plurality of Gaussian components or other distribution modes maintained for that pixel location. The likelihood value for a given pixel may be computed as a weighted sum of the probabilities contributed by each mode of the multimodal distribution, and the foreground threshold applied to these likelihood values may be a fixed value, an adaptive value computed based on statistical properties of the likelihood distribution across the frame, or a value determined through receiver operating characteristic analysis. The aggregation of foreground pixels within each zone at 305 may comprise a simple summation of binary foreground pixel labels, a weighted summation wherein foreground pixels closer to the center of the zone contribute more heavily, or a density-based computation that normalizes the foreground pixel count by the total number of pixels within the zone. The classification threshold against which the aggregated count is compared may be a single static threshold, a per-zone adaptive threshold that accounts for varying zone sizes and expected occupancy patterns, or a hysteresis-based dual threshold wherein a first higher threshold triggers an occupied classification and a second lower threshold triggers a transition back to unoccupied classification.

At 305, alternatives to the thresholding-based foreground mask generation include computing a Mahalanobis distance between each pixel's observed value and the closest matching mode of the multimodal background distribution and applying a chi-squared threshold to the resulting distance values. In another alternative at 305, the processor may employ a Bayesian classification framework wherein prior probabilities of foreground and background are combined with the likelihood values from the multimodal distribution to produce posterior probabilities, and pixels are assigned to the foreground class when the posterior probability of foreground exceeds the posterior probability of background. As a further alternative at 305, rather than aggregating raw foreground pixel counts, the processor may apply morphological filtering operations such as erosion and dilation to the foreground mask prior to aggregation to reduce noise and fill gaps in detected foreground regions, or the processor may employ connected component analysis within each zone and classify the zone as occupied based on the size of the largest connected foreground component exceeding a minimum area threshold rather than relying on the total aggregated pixel count. In yet another alternative at 305, the processor may replace the binary thresholding classification with a soft classification approach wherein the aggregated foreground metric is mapped through a sigmoid function or similar continuous mapping to produce an occupancy probability for each zone, and the zone is classified as occupied when the occupancy probability exceeds a decision boundary.

At 306, the processor generates, for each acquisition cycle, an occupancy bitmask having a plurality of bits respectively corresponding to the plurality of zones defined across the conveyance surface. The occupancy bitmask at 306 comprises a binary data structure in which each bit position maps to a discrete zone of the conveyance surface, thereby establishing a one-to-one correspondence between individual bit positions within the bitmask and the spatially delineated zones. The processor at 306 encodes occupied zones as set bits (e.g., logic "1") and unoccupied zones as cleared bits (e.g., logic "0"), producing a compact binary representation of the spatial occupancy state across the entirety of the conveyance surface. This bitmask generation at 306 is performed on a per-acquisition-cycle basis such that the occupancy bitmask is refreshed or regenerated with each successive cycle, thereby maintaining a temporally current representation of which zones contain objects and which zones remain vacant.

The occupancy bitmask generated at 306 provides a computationally efficient encoding of zone-level occupancy information into a fixed-length binary word or sequence of binary words, where the total number of bits in the bitmask corresponds to the total number of zones. For example, where the conveyance surface is partitioned into thirty-two zones, the occupancy bitmask at 306 may comprise a single 32-bit unsigned integer, with bit position zero corresponding to a first zone and bit position thirty-one corresponding to a thirty-second zone. Where the number of zones exceeds the native word length of the processor, the occupancy bitmask at 306 may span multiple machine words or may be implemented as a bit array of arbitrary length stored in a contiguous memory region. The processor at 306 populates the bitmask by iterating through the plurality of zones and setting or clearing the corresponding bit based on the occupancy status determined in a preceding step, such that the resulting bitmask constitutes a lossless binary summary of zone occupancy across the conveyance surface at the time of the given acquisition cycle.

In alternative embodiments at 306, the processor may generate the occupancy bitmask using an inverted encoding convention in which occupied zones are represented as cleared bits and unoccupied zones are represented as set bits, with downstream logic adapted accordingly to interpret the inverted polarity. In further alternatives at 306, rather than a strict single-bit-per-zone bitmask, the processor may generate a multi-bit occupancy vector in which each zone is represented by two or more bits encoding additional occupancy state granularity, such as a ternary encoding distinguishing among occupied, unoccupied, and indeterminate states. In still other embodiments at 306, the processor may employ a run-length encoded representation or a sparse index list identifying only occupied zone indices rather than a full bitmask, which may offer memory or bandwidth advantages when a relatively small fraction of the total zones are occupied at any given acquisition cycle. The processor at 306 may also generate the bitmask using bitwise logical operations applied in parallel across a register-width group of zones rather than iterating sequentially through each zone, thereby leveraging SIMD or equivalent parallel bit-manipulation instructions available on the processor architecture to accelerate bitmask construction.

At 307, the processor provides the occupancy bitmask to a controller via a controller interface at a refresh rate sufficient to coordinate placement of objects onto the conveyance surface by a robotic picking unit. In particular, the processor transmits the occupancy bitmask as a structured data payload to the controller, where respective bits of the occupancy bitmask are mapped to discrete input addresses of the controller that correspond to spatial positions along the conveyance surface. Each bit in the occupancy bitmask represents whether a particular sub-region of the conveyance surface is occupied or non-occupied, and the mapping to discrete input addresses allows the controller to interpret the occupancy state of each sub-region as though it were a physical sensor input. The controller, upon receiving and interpreting the mapped discrete input addresses, executes control logic to direct the robotic picking unit to selectively place objects onto sub-regions identified as non-occupied, thereby preventing collisions, stacking errors, or placement onto already-occupied areas of the conveyance surface. The refresh rate at which the processor provides the occupancy bitmask to the controller is selected to be commensurate with the operational cycle time of the robotic picking unit and the velocity of the conveyance surface, such that the controller operates on occupancy data that reflects the current state of the conveyance surface at the time of each placement decision. Although described herein with an emphasis on controlling a robotic picking unit, the techniques may be applied to controlling other system components, such as, but not limited to, multiple robotic picking units, upstream infeed equipment, downstream induction equipment and the like as would be apparent to one of ordinary skill in the art.

At 307, the controller interface through which the processor communicates the occupancy bitmask may comprise a fieldbus protocol interface, such as EtherNet/IP, PROFINET, Modbus TCP, or EtherCAT, wherein the occupancy bitmask is written to a register block or a set of discrete coil addresses accessible to the controller. Alternatively, the controller interface may comprise a hardwired discrete I/O connection, wherein each bit of the occupancy bitmask is output as a corresponding digital voltage signal on a dedicated conductor connected to a respective discrete input terminal of the controller. In another alternative, the controller interface may comprise a shared memory region accessible to both the processor and the controller, such as a dual-port RAM or a memory-mapped I/O region, wherein the processor writes the occupancy bitmask to designated memory addresses that the controller polls or reads via interrupt-driven access. In yet another alternative, the controller interface may comprise an OPC Unified Architecture (OPC UA) server-client architecture, wherein the processor publishes the occupancy bitmask as a set of Boolean node variables that the controller subscribes to and reads at the designated refresh rate.

At 307, the mapping of respective bits of the occupancy bitmask to discrete input addresses of the controller may be performed using a predefined address mapping table stored in a memory accessible to the processor, wherein each entry in the table associates a bit index of the occupancy bitmask with a corresponding discrete input address of the controller and a corresponding spatial coordinate or zone identifier on the conveyance surface. Alternatively, the mapping may be performed dynamically by the processor based on configuration parameters received from the controller or from a supervisory control system, allowing the spatial resolution and address assignments to be adjusted without requiring reprogramming of the processor. In a further alternative, the mapping may be performed by the controller itself, wherein the processor transmits the occupancy bitmask as a contiguous block of data and the controller executes internal logic to parse individual bits and associate them with respective spatial positions based on a mapping configuration stored in controller memory. The refresh rate at which the occupancy bitmask is provided at 307 may be a fixed periodic rate, such as a rate synchronized to the controller scan cycle, or may be event-driven, wherein the processor transmits an updated occupancy bitmask to the controller responsive to detecting a change in the occupancy state of one or more sub-regions of the conveyance surface.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

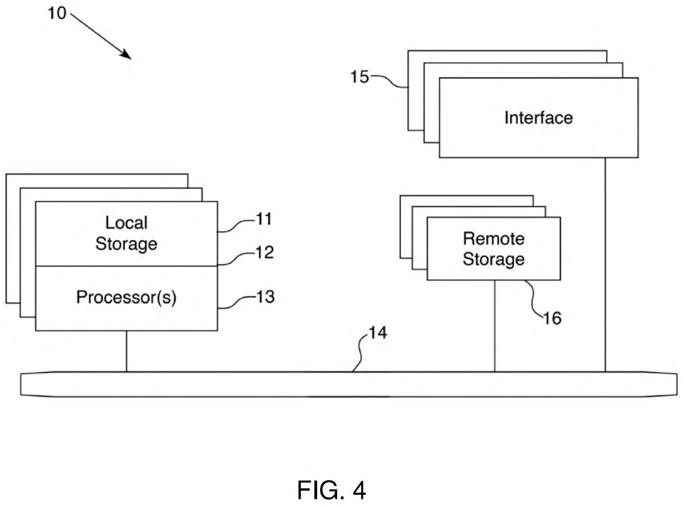

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be described herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or other appropriate virtual environments). Any of the above mentioned systems, units, modules, engines, controllers, components, process steps or the like may be and/or comprise hardware and/or software as described herein. For example, the systems, engines, and subcomponents described herein may be and/or comprise computing hardware and/or software as described herein in association with FIGS. 4-7. Furthermore, any of the above mentioned systems, units, modules, engines, controllers, components, interfaces or the like may use and/or comprise an application programming interface (API) for communicating with other systems units, modules, engines, controllers, components, interfaces or the like for obtaining and/or providing data or information.

Referring now to **FIG. 4**, there is shown a block diagram depicting an exemplary computing device **10** suitable for implementing at least a portion of the features or functionalities disclosed herein. Computing device **10** may be, for example, any one of the computing machines listed in the previous paragraph, or indeed any other electronic device capable of executing software- or hardware-based instructions according to one or more programs stored in memory. Computing device **10** may be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one aspect, computing device **10** includes one or more central processing units (CPU) **12**, one or more interfaces **15**, and one or more busses **14** (such as a peripheral component interconnect (PCI) bus). When acting under the control of appropriate software or firmware, CPU **12** may be responsible for implementing specific functions associated with the functions of a specifically configured computing device or machine. For example, in at least one aspect, a computing device **10** may be configured or designed to function as a server system utilizing CPU **12**, local memory **11** and/or remote memory **16**, and interface(s) **15**. In at least one aspect, CPU **12** may be caused to perform one or more of the different types of functions and/or operations under the control of software modules or components, which for example, may include an operating system and any appropriate applications software, drivers, and the like.

CPU **12** may include one or more processors **13** such as, for example, a processor from one of the Intel, ARM, Qualcomm, and AMD families of microprocessors. In some embodiments, processors **13** may include specially designed hardware such as application-specific integrated circuits (ASICs), electrically erasable programmable read-only memories (EEPROMs), field-programmable gate arrays (FPGAs), and so forth, for controlling operations of computing device **10**. In a particular aspect, a local memory **11** (such as non-volatile random-access memory (RAM) and/or read-only memory (ROM), including for example one or more levels of cached memory) may also form part of CPU **12**. However, there are many different ways in which memory may be coupled to system **10**. Memory **11** may be used for a variety of purposes such as, for example, caching and/or storing data, programming instructions, and the like. It should be further appreciated that CPU **12** may be one of a variety of system-on-a-chip (SOC) type hardware that may include additional hardware such as memory or graphics processing chips, such as a QUALCOMM SNAPDRAGON^{™} or SAMSUNG EXYNOS^{™} CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a controller, an application-specific integrated circuit, and any other programmable circuit.

In one aspect, interfaces **15** are provided as network interface cards (NICs). Generally, NICs control the sending and receiving of data packets over a computer network; other types of interfaces **15** may for example support other peripherals used with computing device **10**. Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, FIREWIRE^{™}, THUNDERBOLT^{™}, PCI, parallel, radio frequency (RF), BLUETOOTH^{™}, near-field communications (e.g., using near-field magnetics), 802.11 (WiFi), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces **15** may include physical ports appropriate for communication with appropriate media. In some cases, they may also include an independent processor (such as a dedicated audio or video processor, as is common in the art for high-fidelity A/V hardware interfaces) and, in some instances, volatile and/or non-volatile memory (e.g., RAM).

Although the system shown in **FIG. 4** illustrates one specific architecture for a computing device **10** for implementing one or more of the embodiments described herein, it is by no means the only device architecture on which at least a portion of the features and techniques described herein may be implemented. For example, architectures having one or any number of processors **13** may be used, and such processors **13** may be present in a single device or distributed among any number of devices. In one aspect, single processor **13** handles communications as well as routing computations, while in other embodiments a separate dedicated communications processor may be provided. In various embodiments, different types of features or functionalities may be implemented in a system according to the aspect that includes a client device (such as a tablet device or smartphone running client software) and server systems (such as a server system described in more detail below).

Regardless of network device configuration, the system of an aspect may employ one or more memories or memory modules (such as, for example, remote memory block **16** and local memory **11**) configured to store data, program instructions for the general-purpose network operations, or other information relating to the functionality of the embodiments described herein (or any combinations of the above). Program instructions may control execution of or comprise an operating system and/or one or more applications, for example. Memory **16** or memories **11**, **16** may also be configured to store data structures, configuration data, encryption data, historical system operations information, or any other specific or generic non-program information described herein.

Because such information and program instructions may be employed to implement one or more systems or methods described herein, at least some network device embodiments may include nontransitory machine-readable storage media, which, for example, may be configured or designed to store program instructions, state information, and the like for performing various operations described herein. Examples of such nontransitory machine- readable storage media include, but are not limited to, magnetic media such as hard disks, floppy disks, and magnetic tape; optical media such as CD-ROM disks; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that may combine physical components of solid state and hard disk drives in a single hardware device (as are becoming increasingly common in the art with regard to personal computers), memristor memory, random access memory (RAM), and the like. It should be appreciated that such storage means may be integral and non-removable (such as RAM hardware modules that may be soldered onto a motherboard or otherwise integrated into an electronic device), or they may be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media may be utilized interchangeably. Examples of program instructions include both object code, such as may be produced by a compiler, machine code, such as may be produced by an assembler or a linker, byte code, such as may be generated by for example a JAVA^{™} compiler and may be executed using a Java virtual machine or equivalent, or files containing higher level code that may be executed by the computer using an interpreter (for example, scripts written in Python, Perl, Ruby, Groovy, or any other scripting language).

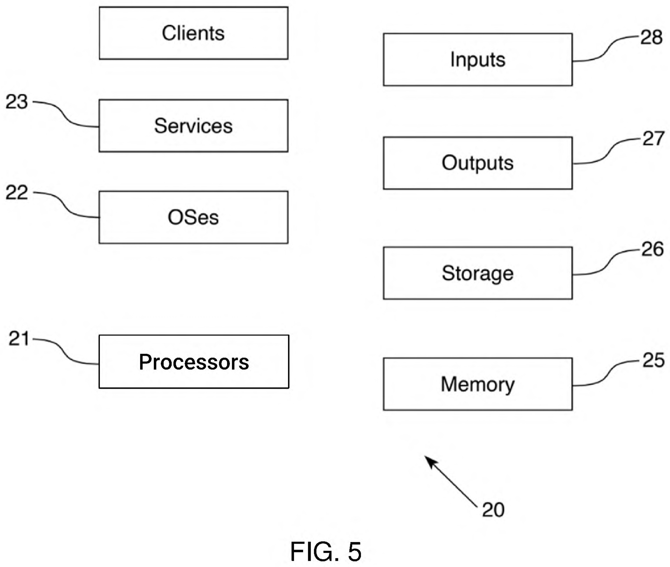

In some embodiments, systems may be implemented on a standalone computing system. Referring now to **FIG. 5**, there is shown a block diagram depicting a typical exemplary architecture of one or more embodiments or components thereof on a standalone computing system. Computing device **20** includes processors **21** that may run software that carry out one or more functions or applications of embodiments, such as for example a client application. Processors **21** may carry out computing instructions under control of an operating system **22** such as, for example, a version of MICROSOFT WINDOWS^{™} operating system, APPLE macOS^{™} or iOS^{™} operating systems, some variety of the Linux operating system, ANDROID^{™} operating system, or the like. In many cases, one or more shared services **23** may be operable in system **20**, and may be useful for providing common services to client applications. Services **23** may for example be WINDOWS^{™} services, user-space common services in a Linux environment, or any other type of common service architecture used with operating system **21**. Input devices **28** may be of any type suitable for receiving user input, including for example a keyboard, touchscreen, microphone (for example, for voice input), mouse, touchpad, trackball, or any combination thereof. Output devices **27** may be of any type suitable for providing output to one or more users, whether remote or local to system **20**, and may include for example one or more screens for visual output, speakers, printers, or any combination thereof. Memory **25** may be random-access memory having any structure and architecture known in the art, for use by processors **21**, for example to run software. Storage devices **26** may be any magnetic, optical, mechanical, memristor, or electrical storage device for storage of data in digital form (such as those described above, referring to **FIG. 4**). Examples of storage devices **26** include flash memory, magnetic hard drive, CD-ROM, and/or the like.

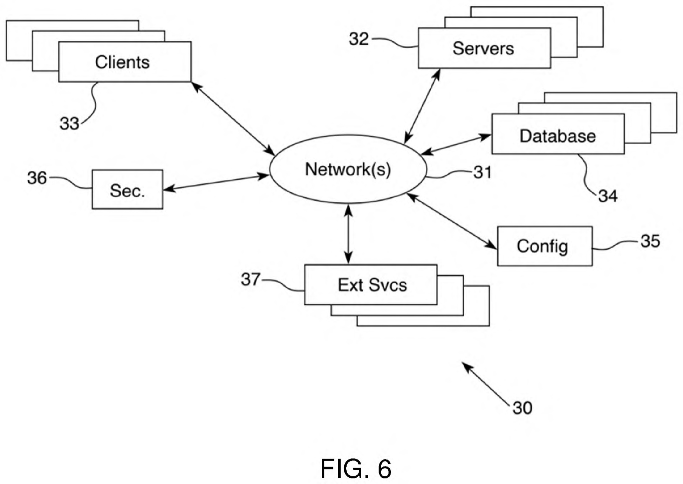

In some embodiments, systems may be implemented on a distributed computing network, such as one having any number of clients and/or servers. Referring now to **FIG. 6**, there is shown a block diagram depicting an exemplary architecture **30** for implementing at least a portion of a system according to one aspect on a distributed computing network. According to the aspect, any number of clients **33** may be provided. Each client **33** may run software for implementing client-side portions of a system; clients may comprise a system **20** such as that illustrated in **FIG. 5**. In addition, any number of servers **32** may be provided for handling requests received from one or more clients **33**. Clients **33** and servers **32** may communicate with one another via one or more electronic networks **31**, which may be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the aspect does not prefer any one network topology over any other). Networks **31** may be implemented using any known network protocols, including for example wired and/or wireless protocols.

In addition, in some embodiments, servers **32** may call external services **37** when needed to obtain additional information, or to refer to additional data concerning a particular call. Communications with external services **37** may take place, for example, via one or more networks **31**. In various embodiments, external services **37** may comprise web-enabled services or functionality related to or installed on the hardware device itself. For example, in one aspect where client applications are implemented on a smartphone or other electronic device, client applications may obtain information stored in a server system **32** in the cloud or on an external service **37** deployed on one or more of a particular enterprise's or user's premises.

In some embodiments, clients **33** or servers **32** (or both) may make use of one or more specialized services or appliances that may be deployed locally or remotely across one or more networks **31**. For example, one or more databases **34** may be used or referred to by one or more embodiments. It should be understood by one having ordinary skill in the art that databases **34** may be arranged in a wide variety of architectures and using a wide variety of data access and manipulation means. For example, in various embodiments one or more databases **34** may comprise a relational database system using a structured query language (SQL), while others may comprise an alternative data storage technology such as those referred to in the art as "NoSQL" (for example, HADOOP CASSANDRA^{™}, GOOGLE BIGTABLE^{™}, and so forth). In some embodiments, variant database architectures such as column-oriented databases, in-memory databases, clustered databases, distributed databases, or even flat file data repositories may be used according to the aspect. It will be appreciated by one having ordinary skill in the art that any combination of known or future database technologies may be used as appropriate, unless a specific database technology or a specific arrangement of components is specified for a particular aspect described herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, some embodiments may make use of one or more security systems 36 and configuration systems **35**. Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments without limitation, unless a specific security **36** or configuration system **35** or approach is specifically required by the description of any specific aspect.

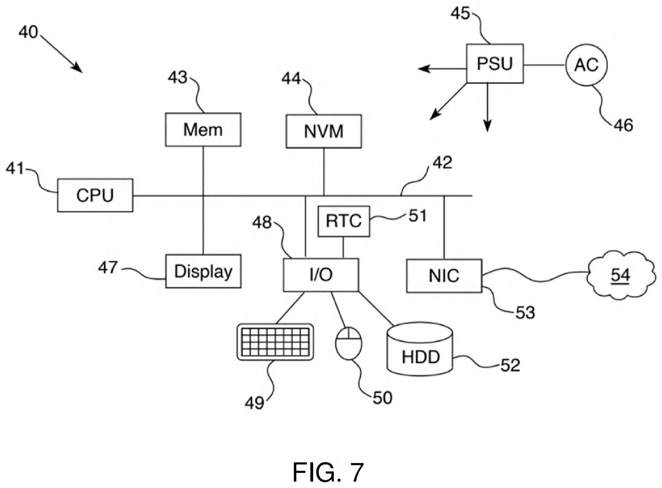

**FIG. 7** shows an exemplary overview of a computer system **40** as may be used in any of the various locations throughout the system. It is exemplary of any computer that may execute code to process data. Various modifications and changes may be made to computer system **40** without departing from the broader scope of the system and method disclosed herein. Central processor unit (CPU) **41** is connected to bus **42**, to which bus is also connected memory **43**, nonvolatile memory **44**, display **47**, input/output (I/O) unit **48**, and network interface card (NIC) **53**. I/O unit **48** may, typically, be connected to keyboard **49**, pointing device **50**, hard disk **52**, and real-time clock **51**. NIC **53** connects to network **54**, which may be the Internet or a local network, which local network may or may not have connections to the Internet. Also shown as part of system **40** is power supply unit **45** connected, in this example, to a main alternating current (AC) supply **46**. Not shown are batteries that could be present, and many other devices and modifications that are well known but are not applicable to the specific novel functions of the current system and method disclosed herein. It should be appreciated that some or all components illustrated may be combined, such as in various integrated applications, for example Qualcomm or Samsung system-on-a-chip (SOC) devices, or whenever it may be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of various embodiments may be distributed among any number of client and/or server components. For example, various software modules may be implemented for performing various functions in connection with the system of any particular aspect, and such modules may be variously implemented to run on server and/or client components.

The skilled person will be aware of a range of possible modifications of the various embodiments described above. Accordingly, the present invention is defined by the claims and their equivalents.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A system for determining occupancy of a conveyance surface for use in controlling at least one component associated with automated picking operations, the system comprising:
a data acquisition device positioned to capture images of at least a portion of the conveyance surface, the conveyance surface associated with a conveyance system configured to transport objects along a direction of conveyance;
one or more processors communicatively coupled to the data acquisition device; and
a memory storing instructions that, when executed by the one or more processors, cause the one or more processors to:
obtain at least one reference image of the conveyance surface when the conveyance surface is unoccupied;
define, within an image coordinate space corresponding to the conveyance surface, a region of interest comprising a plurality of zones, each zone corresponding to a respective physical sub-region of the conveyance surface;
during operation of the conveyance system, for each of a plurality of acquisition cycles:
obtain a current image of the conveyance surface from the data acquisition device; and
for each zone of the plurality of zones, determine an occupancy status of the zone by:
computing a difference metric between pixel values of the current image and pixel values of the reference image and/or a background model of the conveyance surface; and
comparing the difference metric to at least one threshold to classify the zone as occupied or unoccupied;
generate, for each acquisition cycle, an occupancy bitmask having a plurality of bits respectively corresponding to the plurality of zones, each bit indicating the occupancy status of the corresponding zone; and
provide the occupancy bitmask to a controller configured to control at least one component associated with automated picking operations based on the occupancy bitmask.

2. The system of claim 1, wherein the background model comprises a mixture-of-Gaussians model defined over pixel intensities of the conveyance surface in the reference image.

3. The system of claim 1, wherein the plurality of zones comprise polygonal regions having boundaries that are configurable by a user through a graphical user interface that displays the reference image an/ord a current image.

4. The system of claim 1, wherein the one or more processors are further configured to adaptively adjust, based on an expected size of the objects and/or a speed of the conveyance system, a number of the plurality of zones and/or a size of at least one of the plurality of zones.

5. The system of claim 1, wherein providing the occupancy bitmask to a controller comprises providing the occupancy bitmask at intervals on the order of milliseconds.

6. The system of claim 1, wherein the data acquisition device comprises a camera and the one or more processors comprise an embedded computing device mounted proximate to the camera.

7. The system of claim 1, wherein the controller is further configured to detect a stalled object on the conveyance surface by determining that a same pattern of occupied zones in successive occupancy bitmasks persists for at least a threshold number of acquisition cycles.

8. The system of claim 1, wherein the at least one component associated with automated picking operations comprises a robotic picking unit and/or a conveyor.

9. A computer implemented method for determining occupancy of a conveyance surface for use in controlling at least one component associated with automated picking operations, the computer implemented method comprising:
capturing, by a camera positioned with respect to the conveyance surface, at least one reference image of the conveyance surface when the conveyance surface is unoccupied;
defining, by one or more processors, a region of interest within an image plane corresponding to at least a portion of the conveyance surface, the region of interest comprising a plurality of zones each mapped to a respective physical sub-region of the conveyance surface;
during operation of the conveyance system, repeatedly capturing, by the camera, current images of the conveyance surface at a plurality of acquisition times;
for each acquisition time and each zone of the plurality of zones, determining, by the one or more processors, an occupancy status of the zone by:
comparing pixel data of a current image to the reference image and/or a background model of the conveyance surface to compute a difference metric; and
classifying the zone as occupied or unoccupied based on the difference metric relative to a threshold; and
generating, by the one or more processors, an occupancy bitmask having a plurality of bits respectively corresponding to the plurality of zones, each bit indicating the occupancy status of the corresponding zone;
transmitting, via a controller interface, the occupancy bitmask to a controller to control at least one component associated with automated picking operations; and
controlling, by the controller, the at least one component based at least in part on the occupancy bitmask.

10. The method of claim 9, wherein classifying the zone as occupied or unoccupied comprises:
generating a foreground mask by thresholding likelihood values from a multimodal background distribution defined over pixel data of the conveyance surface; and
aggregating foreground pixels within each zone to determine whether the zone is occupied.

11. The method of claim 9, further comprising adaptively adjusting, based on changes in a speed of the conveyance system and/or changes in a distribution of object sizes, at least one of a number of the plurality of zones, a spatial extent of at least one of the plurality of zones, or a time interval between the acquisition times.

12. The method of claim 9, wherein transmitting the occupancy bitmask to the controller comprises mapping respective bits of the occupancy bitmask to discrete input addresses of the controller corresponding to spatial positions along the conveyance surface.

13. The method of claim 9, further comprising generating, by the controller, an exception indication in response to detecting that an occupancy pattern corresponding to a stalled object persists across at least a threshold number of occupancy bitmasks.

14. The method of claim 9, wherein controlling comprises controlling a robotic picking unit based at least in part on the occupancy bitmask to inhibit the robotic picking unit from placing an object into a zone indicated as occupied in the occupancy bitmask.
